# EUROPEAN PATENT APPLICATION

(11) **EP 3 594 836 A1**
(43) Date of publication of application: **15.01.2020**
(21) Application number: 19185190.6
(22) Date of filing: 09.07.2019
(51) Int. Cl.: G06F 21/32, H04L 9/32, G06Q 50/18

(54) **SYSTEMS AND METHOD FOR PROVIDING AUTOMATED NOTARIZATION**

(30) Priority: 09.07.2018 US 201816030362
(71) Applicant: Capital One Services, LLC, McLean, Virginia 22102 (US)
(72) Inventor: BENKREIRA, Abdelkader, McLean, VA Virginia 22102 (US); EDWARDS, Joshua, McLean, VA Virginia 22102 (US); MOSSOBA, Michael, McLean, VA Virginia 22102 (US)
(74) Representative: Barker Brettell LLP

(57) **Abstract**

An automated notarization device (102, 402) may receive biometric data from a biometric sensor (212), transmit the biometric data to a remote server, receive processed biometric data, receive user identification data relating to a user identity, compare processed biometric data and user identification data, receive document data, send an emboss request, record time stamp information, scan a signed version of the document, and transmit a notarization confirmation. An automated notarization device (102, 402) for providing a notarization transaction may include a processor (302, 406), a display (308), an image sensor (210), a biometric sensor (212), a notarization printer, a scanner (214), a transceiver, and a non-transitory memory storing instructions that, when executed by the processor, cause the processor to perform processing including receive biometric data from the biometric sensor, transmit the biometric data to a server remote from the automated notarization device, receive processed biometric data, receive user identification data, compare the processed biometric data and the user identification data, receive document data, send an emboss request, record time stamp information, scan a signed version of the document, and transmit a notarization confirmation.

## Description

### TECHNICAL FIELD

The present disclosure relates generally to methods and systems for providing automated notarization.

### BACKGROUND

For certain types of transactions, for example purchasing a home, transferring a car title, and providing a power of attorney to make legal decisions, a document recording the transaction is notarized. Generally, notarization is a process that assists in prevention of fraud, for example to ensure that the appropriate individual executes a document, and that the execution is done with free will. Notarization also allows verification of transactions after the fact.

Notarization can be done using a notary public. Generally, a notary public is an individual that is commissioned, for example by a state government, to verify the identity of a signer, ensure that the document signer signs the document under free will, and witnesses the signing event. After witnessing such an event, the notary public may apply information unique to the notary public, for example a signature and a seal, as well as information regarding the notary public's authority. This information serves as a way of verifying the notary event, so that others may rely upon and may later verify that the document was notarized.

The notarization process can be time consuming. For example, an individual who desires to notarize a document may need to search for and identify a notary public, travel to where the notary public offers notarization services, and then go through the time-consuming process of notarizing a document. This process must be done every time an individual desires to notarize an additional document. If an individual lives in a rural area, or attempts to access a public notary at a public location, significant time in travel, or waiting in line at businesses that offer notarization, may be required in order for the user to notarize the document.

### SUMMARY OF THE DISCLOSURE

Systems and methods described herein may provide for providing digital notarization.

In one example or aspect, an automated notarization device configured to provide a notarization transaction may include a processor and a display in communication with the processor. The device may comprise an image sensor in communication with the processor. The device may comprise a biometric sensor in communication with the processor. The device may comprise a notarization printer in communication with the processor. The device may comprise a scanner in communication with the processor. The device may comprise a transceiver in communication with the processor. The device may comprise a non-transitory memory storing instructions that, when executed by the processor, cause the processor to perform processing. This may comprise receiving biometric data from the biometric sensor and transmitting the biometric data to a server remote from the automated notarization device. It may comprise receiving processed biometric data, receiving user identification data and/or receiving document data. It may comprise analyzing the document data to identify a signature identity. It may comprise comparing the processed biometric data, the user identification data, and the signature identity. It may comprise sending an emboss request. It may comprise recording time stamp information. It may comprise sending a request to scan a signed version of the document. It may comprise receiving a scanned, signed version of the document. It may comprise transmitting a notarization confirmation. The notarization confirmation may include a digital copy of the one or more pages of the document.
In one aspect of the invention, there is provided an automated notarization device as defined in claim 1.

In some embodiments of either above aspect, the processing may further include receiving the scanned image of a user identifier and comparing the signature on the scanned, signed version of the document with a signature relating to the scanned image of the user identifier.

In some embodiments, the processing may further include receiving a request to create a new user profile, receiving new user biometric data, analyzing the new user biometric data, digitalizing the new user biometric data, and transmitting the digitalized biometric data to the server.

In some embodiments, the processing may further include receiving a request to authenticate the notarization transaction from an authentication server remote from the automated notarization device, transmitting the time stamp information and the scanned, signed document to the requesting server.

In some embodiments, the processing may further include storing user biometric data and comparing the biometric data to the stored user biometric data to authenticate the user.

In some embodiments, the processing may further include receiving a request to create a new user account, receiving facial data, the facial data received from the image sensor, displaying a message to the user, the message requesting a user photo, receiving an image of the user photo, comparing the facial data to the user photo, transmitting a request to the server to create a new account, the request including at least one of the facial data and the user photo image.

In some embodiments, the processing may further include receiving additional biometric data from the biometric sensor, transmitting the additional biometric data to the server, receiving additional processed biometric data, receiving additional user identification data, comparing the additional processed biometric data and the additional user identification data, and sending display information to the display.

In some embodiments, the processing may include receiving user profile information, transmitting the user profile information to the server, receiving processed user profile information, transmitting the additional biometric data to the server, and receiving additional processed biometric data.

As another example or aspect, a method for automatically notarizing a document may comprise receiving, by a processor, biometric data from a biometric sensor. It may comprise transmitting, by the processor, the biometric data to a server remote from the automated notarization device. It may comprise receiving, by the processor, processed biometric data. It may comprise receiving, by the processor, user identification data. It may comprise receiving, by the processor, document data. It may comprise analyzing the document data to identify a signature identity. It may comprise comparing, by the processor, the processed biometric data, the user identification data, and the signature identity. It may comprise sending, by the processor, an emboss request. It may comprise recording, by the processor, time stamp information. It may comprise sending, by the processor, a request to scan a signed version of the document. It may comprise receiving, by the processor, a scanned, signed version of the document. It may comprise transmitting, by the processor, a notarization confirmation.
In accordance with another aspect there is provided a method for automatically notarizing a document as defined in claim 6.

In some embodiments of either above aspect, the method may include receiving a scanned image of a user identifier and comparing the signature on the scanned, signed version of the document with a signature relating to the scanned image of the user identifier.

In some embodiments, the method may include receiving a request to create a new user profile, receiving new user biometric data, analyzing the new user biometric data, digitalizing the new user biometric data, and transmitting the digitalized biometric data to the server.

In some embodiments, the method may include receiving a request to authenticate the notarization transaction from a requesting server remote from the automated notarization device, and transmitting the time stamp information and the scanned, signed document to the requesting server.

In some embodiments, the method may include receiving, by the processor, a request to create a new user account, receiving, by the processor, facial data, displaying a message to the user, the message requesting a user photo, receiving, by the processor, an image of the user photo, comparing, by the processor, the facial data to the user photo, and transmitting a request to the server to create a new account.

In some embodiments, the method may include receiving additional biometric data from the biometric sensor, transmitting the additional biometric data to the server, receiving additional processed biometric data, receiving additional user identification data, comparing the additional processed biometric data and the additional user identification data, and sending display information to the display, the display information relating to a failure to authenticate an additional user relating to the additional user identification data.

In some embodiments, the method may include receiving user profile information, transmitting the user profile information to the server, receiving processed user profile information, transmitting the additional biometric data to the server, and receiving additional processed biometric data.

As another example or aspect, an automated notarization device for providing a notarization transaction may comprise a processor. It may comprise a database. It may comprise a display in communication with the processor. It may comprise an image sensor in communication with the processor. It may comprise a biometric sensor in communication with the processor. It may comprise a notarization printer in communication with the processor. It may comprise a scanner in communication with the processor. It may comprise a non-transitory memory storing instructions that, when executed by the processor, may cause the processor to perform processing. The processing may comprise receiving user biometric data from the biometric sensor. It may comprise receiving stored biometric data from the database. It may comprise receiving user identification data. The user identification data may relate to the user identity. The processing may comprise comparing the user biometric data and the stored biometric data to identify a first user identity. It may comprise receiving document data. It may comprise analyzing the document data to identify a signature identity. It may comprise comparing the first user identity, the second user identity, and the signature identity. The document data may relate to one or more pages of a document. Processing may comprise sending an emboss request. It may comprise recording time stamp information. It may comprise sending a request to scan a signed version of the document. It may comprise receiving a scanned, signed version of the document. It may comprise storing a digital copy of the scanned, signed version of the document.
In accordance with another aspect, there is provided an automated notarization device as defined in claim 11.

In some embodiments of either above aspect, the processing may further include receiving the scanned image of the user identifier; and comparing the signature on the scanned, signed version of the document with a signature relating to the scanned image of the user identifier.

In some embodiments, the processing may further include receiving a request to create a new user profile, receiving new user biometric data, analyzing the new user biometric data, digitalizing the new user biometric data, and storing the digitalized biometric data.

In some embodiments, the biometric sensor may include a retina scanner, a DNA analyzer, a fingerprint scanner, a facial recognition scanner, and a voice analyzer.

In some embodiments, the processing may further include receiving receive additional biometric data from the biometric sensor, receiving additional stored biometric data from the database, receiving additional user identification data, comparing the additional user biometric data and the additional stored biometric data to identify a fourth user identity, comparing the additional user identification data with the fourth user identity, and sending display information to the display.

Features which are described in the context of separate aspects and embodiments of the invention may be used together and/or be interchangeable wherever possible. Similarly, where features are, for brevity, described in the context of a single embodiment, those features may also be provided separately or in any suitable sub-combination. Features described in connection with a/the method may have corresponding features definable with respect to a/the device and use of a/the device, and these embodiments are specifically envisaged.

### BRIEF DESCRIPTION OF THE FIGURES

FIG. 1 shows a block diagram of an automated notarization device and a notarization server communicating over a network according to an embodiment of the present disclosure.
FIG. 2 shows a block diagram of an automated notarization device according to an embodiment of the present disclosure.
FIG. 3 shows a block diagram of a notarization server according to an embodiment of the present disclosure.
FIG. 4 shows a block diagram of an automated notarization device and a notarization server communicating over a local network according to an embodiment of the present disclosure.
FIG. 5 shows a user interface on a display of an automated notarization device according to an embodiment of the present disclosure.
FIG. 6 shows a registration process for registering a user with an automatic notarization device according to an embodiment of the present disclosure.
FIG. 7 shows an automatic notarization process according to an embodiment of the present disclosure.
FIG. 8 shows an automatic notarization process according to an embodiment of the present disclosure.

### DETAILED DESCRIPTION OF SEVERAL EMBODIMENTS

Reference will now be made in detail to exemplary embodiments of the present disclosure, examples of which are illustrated in the accompanying drawings and described herein. In the drawings, like reference numerals are sometimes used to designate like structural elements. It should also be appreciated that the depictions in the figures are diagrammatic and not to scale.

The present disclosure relates generally to methods and systems for notarizing a document using an automated notarization device, without a public notary being present. The automated notarization device may include sensors for obtaining biometric data that can be used to authenticate a user who is signing a document.

The automated notarization device may store biometric data on a local device, or may communicate with a notarization server that stores the biometric data. The automated notarization device can be for example a smartphone or tablet, and may include ports for communicating with peripheral devices, for example biometric sensors. The biometric sensors may be used to obtain user information that may be used to authenticate the user, and may include an image sensor for capturing images and video content, a fingerprint sensor for capturing a user's fingerprint, and a DNA sensor that captures a DNA sample (e.g., a drop of saliva or other bodily fluid). The user information may be digitalized and transmitted over a network to a notarization server, where authentication may occur. Authentication may occur at the automated notarization device.

The automated notarization device may include a notary printer for embossing a document to be notarized with a signature or seal that indicates the device performing the notarization. Prior to applying a signature or seal to the document, the automated notarization device may perform authentication (or receive an indication of a successful authentication). Further embodiments and information is described in the present disclosure.

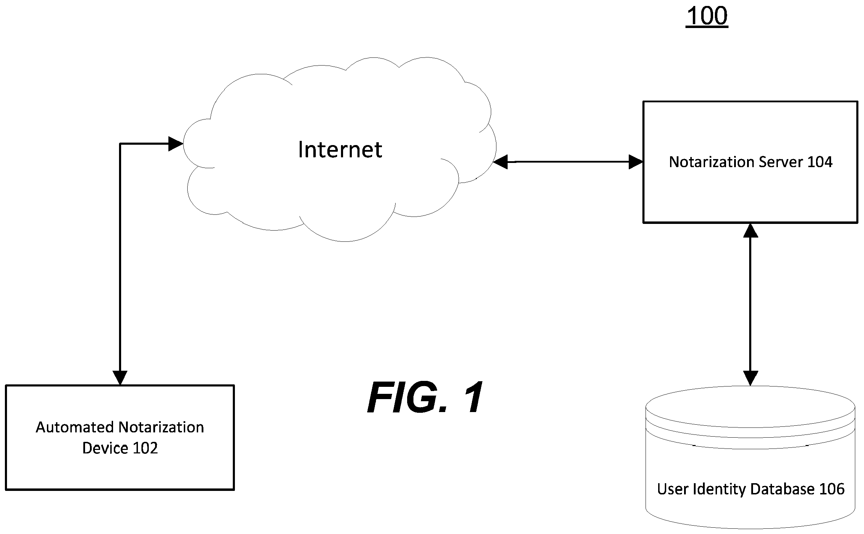

FIG. 1 shows a block diagram of an automated notarization device and a notarization server communicating over a network according to an embodiment of the present disclosure. FIG. 1 includes an automated notarization device 102 in communication with a notarization server 104 over a network, such as the Internet. The notarization server 104 may be in communication with a user identity database 106. The user identity database 106 may be used to store one or more user profiles, each of the user profiles relating to biometric data. The biometric data may include for example fingerprint data , facial recognition data, DNA data, signature data, voice data, user physical data (e.g., a physical trait, such as the user's gait while walking, a tattoo, a scar, or a limp), or other user data that can be digitized and later used for verification and authentication purposes.

In some embodiments, the automated notarization device 102 communicates with notarization server 104 over a local network, such that any delay in obtaining information from user identity database 106 is minimized.

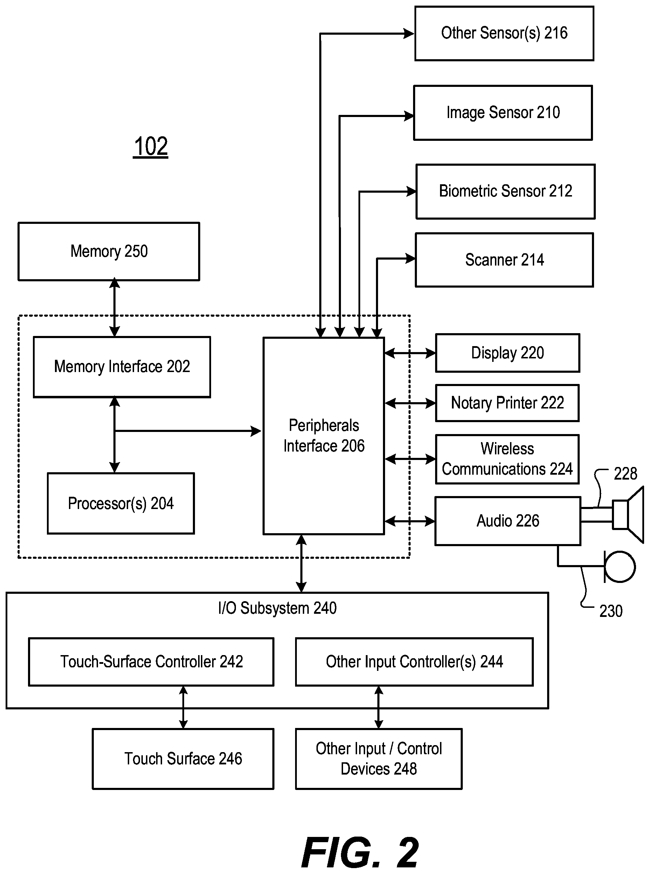

FIG. 2 shows a block diagram of an automated notarization device according to an embodiment of the present disclosure. For example, automated notarization device 102 may interact with notarization server 104 to obtain data relating to a user, including a user profile and/or various biometric data associated with the user profile, as described herein. The automated notarization device 102 may include a memory interface 202, one or more data processors, image processors, and/or central processing units 204 (CPU), and a peripherals interface 206. The memory interface 202, the one or more processors 204, and/or the peripherals interface 206 may be separate components or may be integrated in one or more integrated circuits. The various components in the automated notarization device 102 may be coupled by one or more communication buses or signal lines.

Sensors, devices, and subsystems may be coupled to the peripherals interface 206 to facilitate multiple functionalities. For example, an image sensor 210, one or more biometric sensors 212, and a scanner 214 may be coupled to the peripherals interface 206 to facilitate various functions, such as obtaining image data and biometric data, or scanning a document. Other sensors 216 may also be connected to the peripherals interface 206, such as a global navigation satellite system (GNSS) (e.g., GPS receiver), a temperature sensor, one or more additional biometric sensors, magnetometer, or other sensing devices, to facilitate additional functions, for example in embodiments where an automated notarization device is in a more compact form factor, such that it is capable of being used at different locations.

Biometric sensor 212 may include one or more different types of sensors. For example, biometric sensor 212 may be a fingerprint sensor that is capable of detecting a user's fingerprint when the user applies a finger to the area of the biometric sensor. The biometric sensor 212 may use various types of technology, for example light technology, for producing a digital image of the user's fingerprint that can be analyzed and stored for later authentication. In some embodiments, the image sensor 210 may be used for obtaining information that may be later used to authenticate a user. For example, image sensor 210 may collect data on a face of the user, the facial data including multiple data points that may be later used for authentication.

The image sensor 210 may capture still images or video. In some embodiments, the image sensor 210 may capture video footage of a user walking to the automated notarization device. The video may be analyzed to identify user attributes, for example a walking gait or a limp. In some embodiments, the image sensor 210 may capture photo or video of a user's physical attributes, for example a tattoo, a scar, a piercing, or other physical attributes. The image or video data may be later used to authenticate the user if, for example, the user wants to notarize a document. The image sensor 210 may also be used to analyze the signature on a user's driver license, for example to compare such a signature with a signature on a document to be notarized. Scanner 214 may also be used to obtain an image of a signature on a user identification (e.g., a user's driver license). In some embodiments, the touch-surface controller of the automated notarization device may include logic for receiving and analyzing a user's signature applied to the touch surface, for example if a user applies a stylus or a finger to the touch surface.

In some embodiments, biometric sensor 212 may include a DNA sensor. The biometric sensor 212 may collect user DNA, for example in the form of saliva or blood, and include a DNA analyzer for analyzing attributes of the collected DNA. In other embodiments, audio system 226 may include a microphone for receiving voice data of the user. The user may speak a pre-determined phrase for example, or may speak into the microphone a phrase that may be used as a comparison to stored voice data that may then be used to authenticate a user.

The image sensor 210 may further include a camera subsystem and an optical sensor, for example a charged coupled device (CCD) or a complementary metal-oxide semiconductor (CMOS) optical sensor. In such embodiments, the image sensor 210 may be utilized to facilitate camera functions, such as recording photographs and video clips. The image sensor 210 may be used to collect images of a user to be used during authentication of a user, e.g., by performing facial recognition analysis. The image sensor may also be used to collect images of an environment where the automated notarization device 102 is located, for example the interior and/or exterior of a business, such as a bank.

Communications may be facilitated through one or more wireless communications 224, which can include radio frequency transceivers, optical transceivers, receivers, and transmitters. For example, Bluetooth, such as Bluetooth Low Energy, and WiFi communications described herein may be handled by wireless communications 224. The specific design and implementation of wireless communication 224 may depend on the communication network(s) over which the automated notarization device 102 is intended to operate. For example, the automated notarization device 102 may include communication subsystems 224 designed to operate over a GSM network, a GPRS network, an EDGE network, a WiFi or WiMax network, and a Bluetooth network. For example, wireless communications 224 may include hosting protocols such that the automated notarization device 102 can be configured as a base station for other wireless devices and/or to provide a WiFi service. In some embodiments, wireless communications 224 includes a wired connection where such a connection is available. A wired connection may be used where a reliable connection is necessary, and in some embodiments automated notarization device 102 includes both wireless and wired communications, such that if a wired connection is unavailable, the automated notarization device 102 may use a wireless connection.

Automated notarization device may include a notary printer 222. The notary printer may provide a notarization stamp for notarizing a document. In some embodiments, notary printer 222 is a mechanical stamp (e.g., a document to be notarized is embossed using ink or a stamp that can readily identify the device that provides the notarization service). In some embodiments, notary printer 222 is a printer that may print an embossed notarization symbol on a document to be notarized, for example to show that the document has been notarized.

An audio system 226 may be coupled to a speaker 228 and a microphone 230 to facilitate voice-enabled functions, such as voice recognition, voice replication, digital recording, and telephony functions. The audio system 226 may be configured to facilitate processing voice commands and voice authentication, for example.

The I/O subsystem 240 may include a touch-surface controller 242 and/or other input controller(s) 244. The touch-surface controller 242 may be coupled to a touch surface 246. The touch surface 246 and touch-surface controller 242 may, for example, detect contact on the surface of the touch display, and detect various attributes relating to the touch, such as an amount of force and a change in applied force over time. Various touch sensitivity technologies may be used to detect a contact on a touch surface, including but not limited to capacitive, resistive, infrared, and surface acoustic wave technologies, as well as other proximity sensor arrays or other elements for determining one or more points of contact with the touch surface 246.

The other input controller(s) 244 may be coupled to other input/control devices 248, such as one or more buttons, rocker switches, mouse wheel, infrared port, USB port, and/or a pointer device such as a stylus. The one or more buttons (not shown) may include a button for volume control of the speaker 228 and/or the microphone 230. In some embodiments, the automated notarization device may be a personal computer, and may include input devices like the examples described above.

In some embodiments, for example if the automated notarization device is a tablet, a pressing of the button for a first duration may disengage a lock of the touch surface 246, and a pressing of the button for a second duration that is longer than the first duration may turn power to the automated notarization device 102 on or off. Pressing the button for a third duration may activate a voice control/command module that enables the user to speak commands into the microphone 230 to cause the device to execute the spoken command. The user may customize a functionality of one or more of the buttons. The touch surface 246 can, for example, also be used to implement virtual or soft buttons and/or a keyboard.

The memory interface 202 may be coupled to memory 250. The memory 250 may include high-speed random access memory and/or non-volatile memory, such as one or more magnetic disk storage devices, one or more optical storage devices, and/or flash memory (e.g., NAND, NOR). The memory 250 may store an operating system (not shown), such as Darwin, RTXC, LINUX, UNIX, OS X, WINDOWS, or an embedded operating system such as VxWorks. The operating system may also be a mobile operating system, such as Android or iOS, when automated notarization device 102 is a mobile phone, tablet, or other device running operating system software designed for mobile applications. Other custom operating systems may be stored in memory 250.

The operating system may include instructions for handling basic system services and for performing hardware dependent tasks. In some implementations, the operating system may be a kernel (e.g., UNIX kernel). In some implementations, the operating system may include instructions for performing voice authentication, or for other forms of authentication described herein.

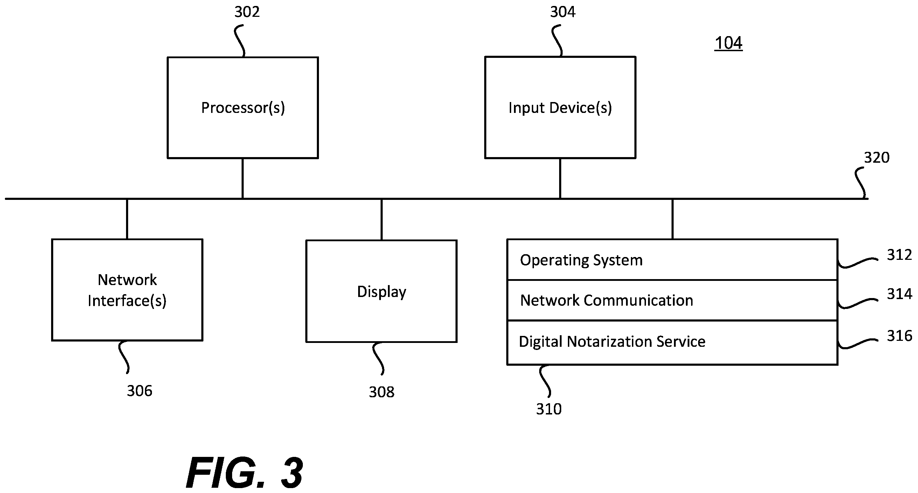

FIG. 3 shows a block diagram of a notarization server according to an embodiment of the present disclosure. The notarization server 104 may be implemented on any electronic device that runs software applications derived from compiled instructions, including without limitation personal computers, servers, smartphones, media players, electronic tablets, game consoles, email devices, etc. In some implementations, the notarization server 104 may include one or more processors 302, one or more input devices 304, one or more network interfaces 306, one or more display devices 308, and one or more computer-readable mediums 310. Each of these components may be coupled through bus 320. While notarization server 104 is shown as a separate device from automated notarization device 102, various elements shown in FIG. 3, for example operating system 312, network communications 314, and digital notarization service 316, as well as one or more applications stored in medium 310, can all run on automated notarization device 102, including the device shown in FIG. 2.

Display device 308 may be any known display technology, including but not limited to display devices using Liquid Crystal Display (LCD) or Light Emitting Diode (LED) technology. Processor(s) 302 may use any known processor technology, including but not limited to graphics processors and multi-core processors. Input device 304 may be any known input device technology, including but not limited to a keyboard (including a virtual keyboard), mouse, track ball, and touch-sensitive pad or display. Bus 320 may be any known internal or external bus technology used for exchanging communications, for example ISA, EISA, PCI, PCI Express, NuBus, USB, Serial ATA and FireWire. Computer-readable medium 310 may be any medium that participates in providing instructions to processor(s) 302 for execution, including without limitation, non-volatile storage media, such as flash drives, or volatile media, such as SDRAM.

Computer-readable medium 310 may include various instructions for implementing an operating system 312 (e.g., Mac OS, Windows, and Linux). The operating system may perform basic tasks, including but not limited to recognizing input from input device 304, sending output to display device 308, tracking files and directories on computer-readable medium 310, controlling peripheral devices (e.g., disk drives, printers, etc.) which can be controlled directly or through an I/O controller, and managing traffic on bus 320. Network communications instructions 314 may establish and maintain network connections (e.g., software for implementing communication protocols, such as TCP/IP, HTTP, Ethernet, telephony, etc.).

Digital notarization service 316 can include instructions that analyze requests to notarize a document, including requests received from one or more automated notarization devices, as described in the present disclosure. For example, digital notarization service instructions may receive user biometric data from an automated notarization device, send a request to obtain stored biometric data from a database or other storage device, and then compare the received biometric data with the stored biometric data for authentication of a user. The digital notarization service 316 may also include instructions for creating new user profiles and maintaining and updating stored user profiles, including stored biometric data associated with a user profile.

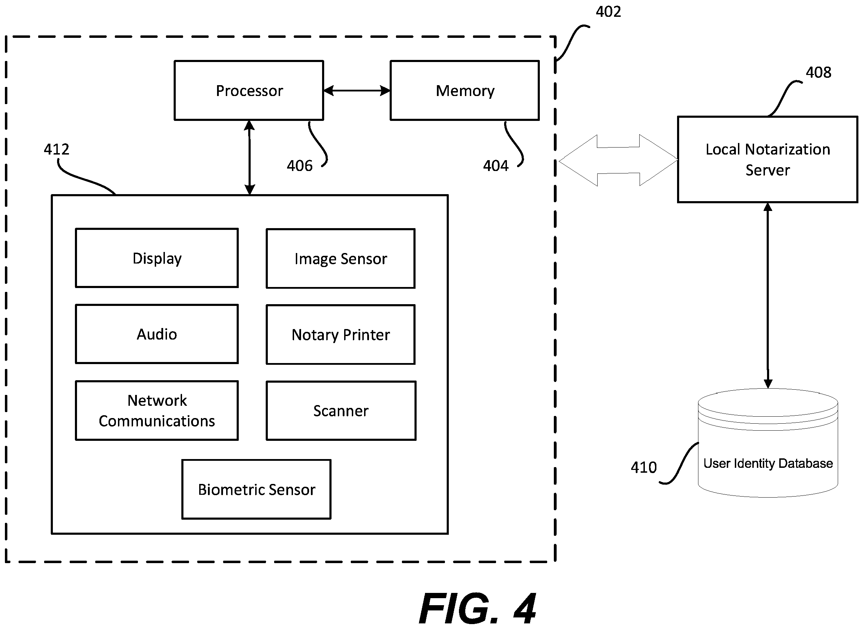

FIG. 4 shows a block diagram of an automated notarization device and a notarization server communicating over a local network according to an embodiment of the present disclosure. The diagram shown in FIG. 4 includes an automated notarization device 402, a local notarization server 408, and a user identity database 410. In the embodiment shown in FIG. 4, biometric data is stored locally, for example in a user identity database 410. Other embodiments not shown are possible, and may include embodiments where automated notarization device 402 communicates with a server over a network, such as the Internet, and accesses data stored in user identity database 410 through a notarization server. Automated notarization device 402 may communicate with local notarization server 408 over a wired or wireless connection. If the notarization server 408 is local, then automated notarization device may be able to provide notarization services in a more efficient and timely manner, and may be able to rely on dedicated connections that are less likely to be interrupted or non-responsive.

Automated notarization device 402 may include one or more processors 406, one or more memories 404, and various peripheral components 412, including a display component, audio component, network communications component, image sensor, notary printer component, scanner component, and biometric sensor. In some embodiments, the automated notarization device is similar in structure to the device shown in FIG. 2.

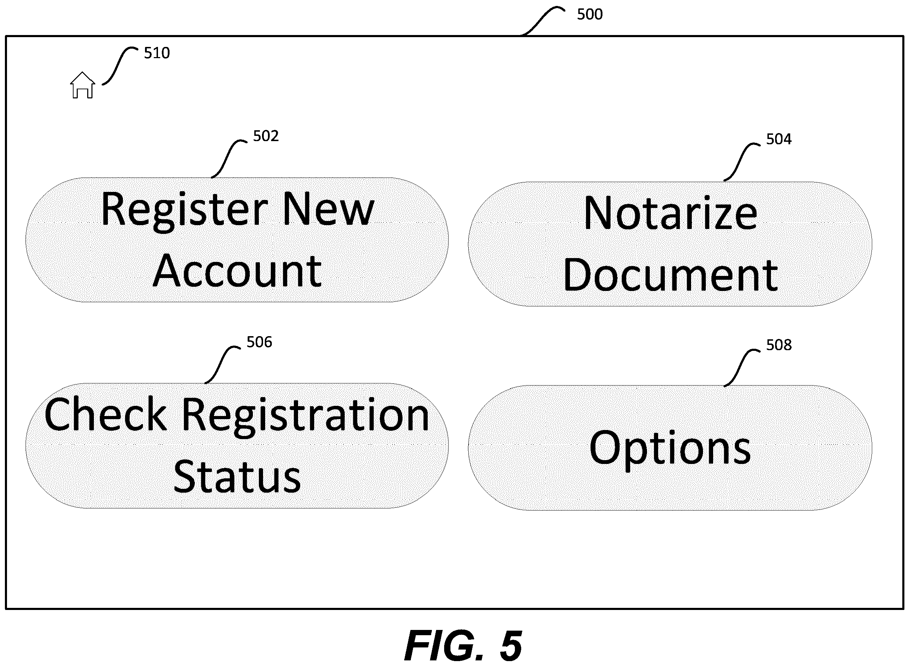

FIG. 5 shows a user interface on a display of an automated notarization device according to an embodiment of the present disclosure. A user interface 500 may include one or more soft buttons, including a registration button 502, a notarization button 504, a registration status button 506, and an options button 508. The user interface may also include a home button 510, for example if a user navigates to a sub-menu and then desires to return to the home interface, an example of which is shown in user interface 500.

A user may select the registration button 502, which may navigate the user to a user interface where a user can input personal information and submit user specific information through one or more biometric sensors disclosed in the present disclosure, such as a fingerprint sensor. In some embodiments, a user may register through alternative processes, for example through a third party, or through a business that owns or manages the automated notarization device, such as a bank. If a user submits a registration request, the user can select registration status button 506 in order to determine whether the user's registration has been successfully processed and the user is registered with the automated notarization system.

A user may select the notarization button 504. If the user selects button 504, the user may be directed to a user interface that may request that the document to be notarized is held up by the user to an image sensor in the automated notarization device, or to submit the document to a scanner through a document feeder. In some embodiments, the user interface may request that the user interact with a biometric sensor. For example, the user interface may display a message requesting the user apply their finger to a fingerprint sensor. In other embodiments, multiple forms of authentication may be required, for example a user may be required to submit information through an image sensor (e.g., for facial recognition purposes) and a fingerprint sensor.

The user interface may also be configured to display error messages, for example when a user logs into the device using a user profile (e.g., after registering a new account), and submitted biometric data is inconsistent with biometric data that was submitted during the registration process.

User interface 500 may also include an option button 508 that may enable a user to change user profile settings, for example a contact e-mail or phone number, or to change biometric data forms that may be submitted, for example if a user is not comfortable submitting DNA information and desires to submit fingerprint information. The options button 508 may also be selected in order to enable a user to define user-specific preferences, for example preferred forms of authentication, user display preferences (e.g., font size, screen background, color scheme), and other known user interface preferences that may be configured by a user.

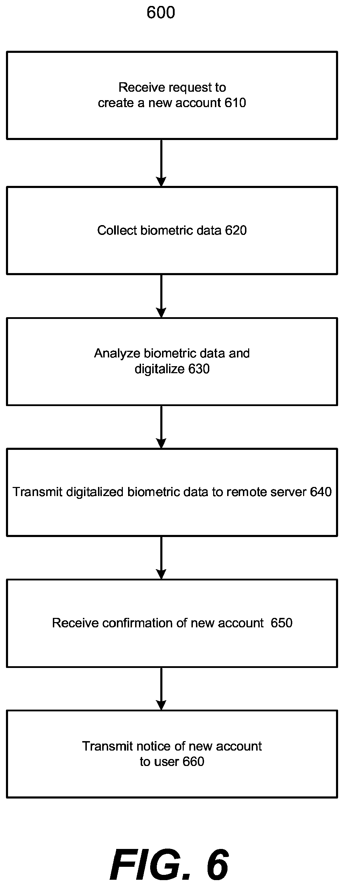

FIG. 6 shows a registration process for registering a user with an automatic notarization device according to an embodiment of the present disclosure. The process shown may occur if a user for example were to use an automated notarization device and access a registration user interface that enables a new user to submit personal information that may be reviewed and authenticated, resulting in a user profile being created.

At step 610, a request to create a new account is received. In some embodiments, a user is able to access a registration user interface displayed on the display of the automated notarization device, input personal information and submit biometric information, and then submit the request to create a new account that is received by the device. In some embodiments, the user may register with an employee of a business, for example a bank employee, who may input the data into a system and collect user biometric information that may be used for authentication purposes for notarizing a document.

At step 620, user biometric data or information is collected. The automated notarization device may include one or more biometric sensors, including an image sensor, a fingerprint sensor, a DNA sensor, and a voice sensor, each of which are capable of obtaining user-specific biometric data that may be later used for authentication of the user. In some embodiments, as discussed in the present disclosure, the user may register through an employee of a business, such as a bank employee, and may submit the biometric data through this process.

At step 630, collected biometric data is analyzed and digitized. In some embodiments, user biometric data is stored in a database that is accessible through a local network, or is stored in a database accessible through a notarization server over a network such as the Internet. The automated notarization device may analyze the collected biometric data to ensure that the data satisfies certain requirements (e.g., that a fingerprint is legible and capable of being compared with another fingerprint, or that facial data or information is sufficient to later authenticate a user using facial recognition algorithms). In some embodiments, the user's data may be collected in analog format, and may be digitized in order to transmit the biometric data to a database or other storage device.

At step 640, the digitized biometric data is transmitted to a notarization server. In some embodiments, the notarization server is a remote server (e.g., it is not accessible through a local area network or LAN) and requires a network connection (e.g., an Internet connection) in order to transmit digitized biometric data. In some embodiments, the notarization server is accessible on a LAN, such that the digitized biometric data is transmitted over the LAN.

At step 650, the new account is created and the automated notarization device receives confirmation of the new account creation. In some embodiments, the confirmation may not be transmitted to an automated notarization device, but instead the automated notarization device may access a stored profile upon an attempted user login. The automated notarization device may then confirm to the user that the account request has been processed and approved, and that the user may begin notarizing documents.

At step 660, a notice of creation of the new account is transmitted to the user. In some embodiments, the user may provide an e-mail address, phone number, or other contact information during the registration process. The automated notarization device, the notarization server, or other logic may be used to send a notification to the user that the account has been created and that the user may begin notarizing documents. In some embodiments, the account may be created without the user receiving notification of account creation.

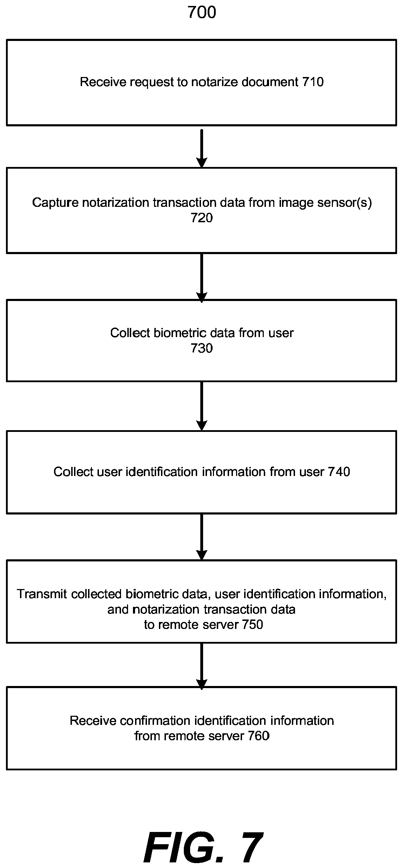

FIG. 7 shows an automatic notarization process according to an embodiment of the present disclosure. The process shown in FIG. 7 shows a portion of the process that may be used to notarize a document, and may occur after a user has registered. If a user has not registered, then in some embodiments the automated notarization device may not be able to authenticate the user for purposes of notarizing a document.

At step 710, a request to notarize a document is received. The automated notarization device may receive the request if a user accesses the device, for example if the user selects the notarization button shown in the exemplary user interface of FIG. 5.

At step 720, notarization transaction data is captured from an image sensor. For example, the user may hold the document to be notarized to the image sensor, including the signature page. The image sensor may capture images of such a document, including the signature page, and the automated notarization device may analyze the signature page to identify the name of the individual that is identified in the signature block (and that is supposed to sign the document). In other embodiments, the user may place the document in a document feeder of the automated notarization device. A scanner may scan one or more pages of the document (after the user places the document in the document feeder and the document is received by the automated notarization device). The automated notarization device may analyze the scanned document to identify the name of the individual who is to sign the document to be notarized, for example by analyzing the signature block.

In some embodiments, the automated notarization device may identify additional user information, in addition to a name included in a signature block. For example, the automated notarization device may identify address information that may be used for authentication or other purposes. The automated notarization device may apply an OCR process for identifying information in the document to be notarized, or may apply other techniques suitable to identify information contained within such a document.

At step 730, biometric data is collected from the user. The biometric data may include different types of data, including facial data (or other physical attribute data), fingerprint data, DNA data, or other forms of biometric data. The biometric data may be collected from one or more biometric sensors in automated notarization device. For example, the automated notarization device may include a fingerprint sensor, such that when a user applies a finger to the fingerprint sensor, the sensor detects the presence of the finger, performs a scan of the area of the finger in contact with the fingerprint sensor, and then analyzes and processes that fingerprint data, for example to authenticate the user. Biometric data may be collected from other biometric sensors, as described in the present disclosure. For example, in some embodiments, the automated notarization device may include an image sensor that captures user-specific information, for example a user gait when approaching the device, or a physical attribute when the user is in range of the image sensor. Such physical attributes may include for example a tattoo or a scar, or facial information. In some embodiments, the image sensor does not capture data during this part of the notarization process.

At step 740, user identification information is collected from the user attempting to notarize a document. In some embodiments, the automated notarization device may obtain an image of user identification information, for example information on a driver's license. Depending on the type of driver's license, it may include identifying information, for example a name, address, digital signature, and other information identifying the user who was issued the driver's license. The automated notarization device can include logic for analyzing driver licenses associated with one or more states in the United States, as well as licenses issued abroad. The collected user identification information may be used for further authentication, for example to compare a signature applied by the user to a document that the user desires to be notarized with the signature on the driver's license. In some embodiments, the user identification information may be obtained from, e.g., a credit card that may be swiped in a credit card reader included as part of the automated notarization device, and in some embodiments, the automated notarization device may include a touchscreen and a user interface, such that the user may manually enter a name and/or other information, including an address and other identifying information.

In some embodiments, if the notarization transaction data (e.g., a name corresponding to a signature line on a document to be notarized) is different from user identification information (e.g., a name on a driver's license), the automated notarization device may display an error message, and may request additional user identification information. In some embodiments, if, for example, the first name and last name of the user are identical for the user identification information and notarization transaction data, the automated notarization device may proceed to transmit data to a remote server, as described in step 750 below.

At step 750, the collected biometric data, notarization transaction data, and user identification information may be transmitted to a remote server. In some embodiments, automated notarization device may send each of biometric data, notarization transaction data, and user identification information to the remote server, and in other embodiments, automated notarization device may send only biometric data, only notarization transaction data, or only user identification information, or a combination of such data or information. For example, in some embodiments, automated notarization device may transmit only user identification information to the remote server. The remote server may analyze the user identification information and identify stored biometric data associated with the user identification information, and may send the stored biometric data to the automated notarization device. The stored biometric data may then be used to compare against collected user biometric data (e.g., to determine if the user identification information results in a match).

In some embodiments, user biometric data and user information is stored in a storage device that is in communication with a notarization server, and the notarization server is in communication with the automated notarization device over a network, such as the Internet. In some embodiments, the notarization server is in communication with the automated notarization device over a LAN, and user data is stored in a device in communication with the notarization server over the LAN. In some embodiments, the automated notarization device may be in direct communication with the storage device that stores user information, for example user biometric data. In other embodiments, the storage device may be included with the automated notarization device, such that the device does not require communicating with an external device to authenticate a user.

At step 760, confirmation identification information is received from the notarization server. The automated notarization device may receive the confirmation identification information. The confirmation identification information may include an identity confirmation, for example a user identifier, that the automated notarization device can then use to authenticate the user attempting to notarize a document. In some embodiments, the confirmation identification information may include user biometric data stored in a database or other storage device accessible to the notarization server that the automated notarization device may use to compare biometric data obtained at the automated notarization device. The user authentication may occur at the automated notarization device, or at the notarization server.

The confirmation identification information may also include the user identification information and the notarization transaction data. If the automated notarization device performs authentication, then the data transferred between the automated notarization device and the notarization server may include only information needed to identify stored biometric data to be transmitted to the automated notarization device. In other embodiments, if the notarization server performs authentication, the automated notarization device may send more information, including notarization transaction data, user identification information, and collected biometric data.

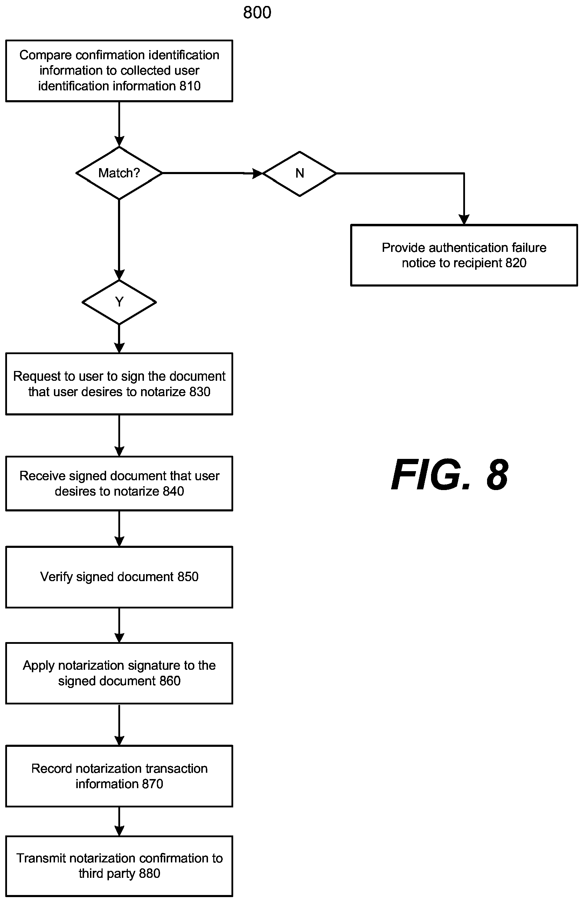

FIG. 8 shows an automatic notarization process according to an embodiment of the present disclosure. In some embodiments, it continues the process shown in FIG. 7 for notarizing a document presented to an automated notarization device by a user.

At step 810, confirmation identification information is compared to collected user identification information. As discussed herein, confirmation identification information may include an identity confirmation, user biometric data (originally collected from the automated notarization device), stored user biometric data, user identification information, and/or notarization transaction data. In some embodiments, the confirmation identification information includes only the identity confirmation, and is compared to collected user identification information to determine whether that information matches. The identity confirmation and/or the collected user identification information may also be compared to the notarization transaction data. This additional comparison may verify that the party intended to sign the document matches the user identity associated with the confirmation identification information and the user identification information.

In some embodiments, the remote server may perform the comparison of stored biometric data to user biometric data received by the automated notarization device. In such embodiments, the automated notarization may not need to perform this comparison. In other embodiments, the confirmation identification information includes the stored biometric data, and the automated notarization server may compare the received (stored) biometric data with the biometric data collected from the user.

The automated notarization device may compare stored biometric data (that may be included in the confirmation identification information received from the notarization server) to biometric data collected from the user attempting to notarize a document to authenticate the user. In some embodiments, the notarization server may receive sufficient information from the automated notarization device, such that it performs the comparison for authenticating the user. In such embodiments, the automated server device may include logic for determining whether a different user has switched with the user who originally submitted the notarization request, using for example the image sensors or other sensors disclosed and described herein.

If the process at step 810 determines that there is not a match (e.g., the user cannot be authenticated), then at step 820, an authentication failure notice is presented to the user of the automated notarization device through the device's display. In some embodiments, the automated notarization device may present a message stating that the device is unable to authenticate the user, and provide contact information to the user. The automated notarization device may transmit information relating to the notarization transaction, for example the user identification information, collected biometric data, and other information to a remote server. Such information may be used for reference purposes, for example if the user contacts a customer service representative using the provided contact information.

In some embodiments, the automated notarization device may send an authentication failure message to the notarization server with information regarding the notarization transaction. That information may include which comparisons specifically failed. For example, a fingerprint stored at the notarization server and transmitted to the automated notarization device may be different than a fingerprint obtained at the automated notarization device during the notarization transaction. In some embodiments, the automated notarization device may present a message to the user that a specific comparison failed (e.g., a comparison of fingerprints), and inquire the user as to whether they desire to attempt to notarize a document again. If the user, for example, applied a different finger to the fingerprint sensor than a finger used for registration (e.g., if the user submitted a right index finger during registration, but attempted to notarize a document using a left index finger), the user may still be able to notarize the document despite the authentication failure message.

If the process at step 810 determines that there is a match (e.g., the user can be authenticated), then at step 830, the automated notarization device requests the user to sign the document that the user desires to notarize. In some embodiments, the automated notarization device can monitor the user to ensure that the user who requests notarization is the same user who signs the document. This may be done for example through the image sensor.

At step 840, the automated notarization device receives the signed document that the user desires to notarize. The document may be received through a document feeder for example, or in an area of the automated notarization device where the scanner is accessible. In some embodiments, the automated notarization device may request the user to hold the document to an image sensor, and the image sensor may capture images of the document, including the signature page.

At step 850, the automated notarization device verifies the signed document received in step 840. In some embodiments, the automated notarization device verifies the signed document by comparing the signature on the document to a different signature, for example a signature on a user's driver license, or a signature stored at the notarization server (e.g., biometric data submitted as part of the registration process).

The scanner may rescan the document to be notarized. The automated notarization device may compare an original scan of the unsigned document to the signed document, and determine that a signature exists in a signature block or on a signature line that was previously empty in the originally scanned document. In other embodiments, the user may present the signed document to the image sensor. The image sensor may capture images of the signed document, and the automated notarization device may compare an original image captured by the image sensor (pre-signature) to a later captured image (post-signature). The automated notarization server may compare an original document scan to a document rescan (or an original document image to a newer document image), for example by aligning the original scan/image with the updated scan/image, including for each page of a multi-page document, and identifying any significant differences between the two scans/images. In some embodiments, prior to performing any such comparisons, the automated notarization server may perform an OCR or similar process on the scan or image copies of the document to be notarized. In such embodiments, the automated notarization server may use the OCR versions for comparing digital copies of the documents.

In some embodiments, if the user signs the document in an unexpected location, the automated notarization device may display a message to the user that the document has not been signed in the expected location. The user may sign the copy and present the document to the automated notarization device in a manner as described in the present disclosure, such that the document can be rescanned, or another image of the document may be captured by the image sensor, for comparison to an original digital copy of the document.

At step 860, a notarization signature is applied to the signed document. In some embodiments, the signed document is embossed using a physical notarization stamp including ink or a stamp that may alter the paper in a manner that it can be determined that the document has been notarized. In some embodiments, the automated notarization device may include a notarization printer, and may print a notarization signature on the document to be notarized. In some embodiments, the user may notarize one or more documents at the same time, or request that multiple pages of a single document include a notarization signature.

At step 870, the automated notarization device records notarization transaction information. In some embodiments, the automated notarization device may record a time, including date and year information, and may record information captured from one or more sensors, for example an image or video of the user through an image sensor. The automated notarization device may scan a copy of the signed document and store the document for later proof that a document was notarized by the automated notarization device. In some embodiments, the automated notarization device may transmit the notarized document and/or the notarization transaction information to the notarization server, which may provide notarization proof upon request. In other embodiments, the automated notarization device itself stores such information for notarization proof.

At step 880, the automated notarization device transmits a notarization confirmation to a third party. In some embodiments, the automated notarization device does not transmit a copy of the notarized document and other information regarding the notarization transaction, for example if the user does not provide information, such as a third party's e-mail address. In other embodiments, the user may provide third party contact information, and the automated notarization device may send a copy of the notarized document and/or notarization transaction information to the third party using the contact information. In some embodiments, the notarization server may send such information to the third party, for example where the copy of the notarized document and/or notarization transaction information is transmitted to the notarization server by the automated notarization device.

Referring back to FIG. 3, the described features of notarization server 104 may be implemented in one or more computer programs that may be executable on a programmable system including at least one programmable processor coupled to receive data and instructions from, and to transmit data and instructions to, a data storage system, at least one input device, and at least one output device. Suitable processors for the execution of a program of instructions may include, by way of example, both general and special purpose microprocessors, and may include a single processor or multiple processors (or cores).

Generally, a processor may receive instructions and data from a memory. The computer may include a processor for executing instructions and one or more memories for storing instructions and data. A computer may also include, or be operatively coupled to communicate with, one or more storage devices for storing data files, such as magnetic disks, hard disks and removable disks, and other storage disks. Storage devices suitable for tangibly embodying computer program instructions and data may include all forms of non-volatile memory, including by way of example semiconductor memory devices, such as EPROM, EEPROM, and flash memory devices, as well as other non-volatile memory.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected through digital data communications, such as a communication network. Examples of communication networks include, e.g., a telephone network, a LAN, a WAN, and the Internet. The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation. The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API. In some implementations, an API call may report to an application the capabilities of a device running the application, such as input capability, output capability, processing capability, power capability, communications capability, etc.

The present disclosure is not intended to disclose all embodiments. Other modifications may be possible, and such modifications may involve other features which are known in the design, manufacture, and use of fixed and portable communications systems and component parts thereof, and which may be used instead of or in addition to features already described herein. Although claims have been formulated in this application to particular combinations of features, it should be understood that the scope of the disclosure of the present application also includes any novel feature or any novel combination of features disclosed, either explicitly or implicitly, or any generalization thereof.

From reading the present disclosure, other variations and modifications will be apparent to the skilled person. Such variations and modifications may involve equivalent and other features which are already known in the art, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the devices and systems described may be incorporated into/used in corresponding methods.

For the sake of completeness, it is also stated that the term "comprising" does not exclude other elements or steps, the term "a" or "an" does not exclude a plurality, a single processor or other unit may fulfil the functions of several means recited in the claims and any reference signs in the claims shall not be construed as limiting the scope of the claims.

Various features and advantages of the invention are set forth in the following claims.

## Claims

1. An automated notarization device for providing a notarization transaction comprising:
a processor;
a display in communication with the processor;
an image sensor in communication with the processor, the image sensor configured to obtain images of a user of the automated notarization device;
a biometric sensor in communication with the processor
a notarization printer in communication with the processor;
a scanner in communication with the processor;
a transceiver in communication with the processor; and
a non-transitory memory storing instructions that, when executed by the processor, cause the processor to perform processing comprising:
receive biometric data from the biometric sensor;
transmit the biometric data to a server remote from the automated notarization device;
receive processed biometric data, the processed biometric data comprising information relating to a user identity;
receive user identification data, the user identification data relating to the user identity;
receive document data, the document data relating to one or more pages of a document;
analyze the document data to identify a signature identity;
compare the processed biometric data, the user identification data, and the signature identity;
based on comparing the processed biometric data, the user identification data, and the signature identity, send an emboss request, the emboss request relating to embossing the one or more pages of the document with a notarization signature;
record time stamp information, the time stamp information relating to the notarization transaction;
send a request to scan a signed version of the document;
receive a scanned, signed version of the document; and
transmit a notarization confirmation, the notarization confirmation including a digital copy of the one or more pages of the document.

2. The automated notarization device of claim 1, wherein the processing further comprises:
receive a request to authenticate the notarization transaction from an authentication server remote from the automated notarization device; and
based on the request to authenticate the notarization transaction, transmit the time stamp information and the scanned, signed document to the requesting server.

3. The automated notarization device of claim 1 or claim 2, wherein the processing further comprises:
store user biometric data, the user biometric data relating to the user identity, and
compare the biometric data to the stored user biometric data to authenticate the user.

4. The automated notarization device of claim 1, claim 2 or claim 3, wherein the processing further comprises:
prior to receiving biometric data from the biometric sensor, receive a request to create a new user account;
receive facial data, the facial data received from the image sensor;
display a message to the user, the message requesting a user photo;
receive an image of the user photo;
compare the facial data to the user photo; and
in response to comparing the facial data to the user photo, transmit a request to the server to create a new account, the request comprising at least one of the facial data and the user photo image.

5. The automated notarization device of claim 1 or of any of claims 2 to 4, wherein the processing further comprises:
receive additional biometric data from the biometric sensor;
transmit the additional biometric data to the server;
receive additional processed biometric data, the additional processed biometric data comprising information relating to an additional user identity;
receive additional user identification data, the additional user identification data relating to the additional user identity;
compare the additional processed biometric data and the additional user identification data; and based on comparing the additional processed biometric data and the additional user identification data, send display information to the display, the display information relating to a failure to authenticate an additional user relating to the additional user identification data;
and/or wherein the processing further comprises:
receive user profile information, the user profile information received from the image sensor;
transmit the user profile information to the server;
receive processed user profile information, the processed user profile information relating to the user profile information; and
transmit the additional biometric data to the server; and
receive additional processed biometric data,
wherein the sending an emboss request is further based on receiving the additional processed biometric data.

6. A method for automatically notarizing a document comprising:
receiving, by a processor, biometric data from a biometric sensor;
transmitting, by the processor, the biometric data to a server remote from the automated notarization device;
receiving, by the processor, processed biometric data, the processed biometric data comprising information relating to a user identity;
receiving, by the processor user identification data, the user identification data relating to the user identity;
receiving, by the processor, document data, the document data relating to one or more pages of a document;
analyzing the document data to identify a signature identity;
comparing, by the processor, the processed biometric data, the user identification data, and the signature identity;
based on comparing the processed biometric data and the user identification data, sending, by the processor, an emboss request, the emboss request relating to embossing the document with a notarization signature;
recording, by the processor, time stamp information, the time stamp information relating to the notarization transaction;
sending, by the processor, a request to scan a signed version of the document;
receiving, by the processor, a scanned, signed version of the document; and
transmitting, by the processor, a notarization confirmation, the notarization confirmation including a digital copy of the document.

7. The method of claim 6, further comprising:
receiving a scanned image of a user identifier; and
comparing the signature on the scanned, signed version of the document with a signature relating to the scanned image of the user identifier,
wherein the user identifier is a driver's license;
and/or further comprising:
receiving a request to create a new user profile;
receiving new user biometric data;
analyzing the new user biometric data;
digitalizing the new user biometric data; and
transmitting the digitalized biometric data to the server,
wherein the digitalized biometric data is based on the new user biometric data.

8. The method of claim 6 or claim 7, further comprising:
receiving a request to authenticate the notarization transaction from a requesting server remote from the automated notarization device; and
based on the request to authenticate the notarization transaction, transmitting the time stamp information and the scanned, signed document to the requesting server.

9. The method of claim 6, claim 7 or claim 8, further comprising:
prior to receiving biometric data from the biometric sensor, receiving, by the processor, a request to create a new user account;
receiving, by the processor, facial data;
displaying a message to the user, the message requesting a user photo;
receiving, by the processor, an image of the user photo;
comparing, by the processor, the facial data to the user photo; and
in response to comparing the facial data to the user photo, transmitting a request to the server to create a new account, the request comprising at least one of the facial data and the user photo image.

10. The method of claim 6 or of any of claims 7 to 9, further comprising:
receiving additional biometric data from the biometric sensor;
transmitting the additional biometric data to the server;
receiving additional processed biometric data, the additional processed biometric data comprising information relating to an additional user identity;
receiving additional user identification data, the additional user identification data relating to the additional user identity;
comparing the additional processed biometric data and the additional user identification data; and
based on comparing the additional processed biometric data and the additional user identification data, sending display information to the display, the display information relating to a failure to authenticate an additional user relating to the additional user identification data;
and/or further comprising:
receiving user profile information, the user profile information received from the image sensor;
transmitting the user profile information to the server;
receiving processed user profile information, the processed user profile information relating to the user profile information;
transmitting the additional biometric data to the server; and
receiving additional processed biometric data,
wherein the sending an emboss request is further based on receiving the additional processed biometric data.

11. An automated notarization device for providing a notarization transaction comprising:
a processor;
a database, the database configured to store biometric data relating to one or more users;
a display in communication with the processor, the display further comprising a touch sensor configured to detect user input with the display;
an image sensor in communication with the processor, the image sensor configured to obtain images of a user of the automated notarization device;
a biometric sensor in communication with the processor
a notarization printer in communication with the processor;
a scanner in communication with the processor;
a non-transitory memory storing instructions that, when executed by the processor, cause the processor to perform processing comprising:
receive user biometric data from the biometric sensor;
receive stored biometric data from the database;
receive user identification data, the user identification data relating to the user identity;
compare the user biometric data and the stored biometric data to identify a first user identity;
compare the first user identity with a second user identity, the second user identity based on the user identification data;
receive document data, the document data relating to one or more pages of a document;
analyze the document data to identify a signature identity;
compare the signature identity with the first user identity and the second user identity;
based on comparing the first user identity, the second user identity, and the signature identity, send an emboss request, the emboss request relating to embossing the one or more pages of the document with a notarization signature;
record time stamp information, the time stamp information relating to the notarization transaction;
send a request to scan a signed version of the document;
receive a scanned, signed version of the document; and
store a digital copy of the scanned, signed version of the document.

12. The automated notarization device of claim 1 or claim 11, wherein the user identification data further comprises a scanned image of a user identifier, and wherein the processing further comprises:
receive the scanned image of the user identifier; and
compare the signature on the scanned, signed version of the document with a signature relating to the scanned image of the user identifier,
wherein the user identifier is a driver's license.

13. The automated notarization device of claim 1, claim 11 or claim 12, wherein the processing further comprises:
receive a request to create a new user profile;
receive new user biometric data;
analyze the new user biometric data;
digitalize the new user biometric data; and
store the digitalized biometric data.

14. The automated notarization device of claim 11, claim 12 or claim 13, wherein the biometric sensor consists of one of a retina scanner, a DNA analyzer, a fingerprint scanner, a facial recognition scanner, and a voice analyzer.

15. The automated notarization device of claim 11 or of any of claims 12 to 14, wherein the processing further comprises:
receive additional biometric data from the biometric sensor;
receive additional stored biometric data from the database;
receive additional user identification data, the additional user identification data relating to a third user identity;
compare the additional user biometric data and the additional stored biometric data to identify a fourth user identity;
compare the additional user identification data with the fourth user identity;
based on comparing the additional user identification data with the fourth user identity, send display information to the display, the display information relating to a failure to authenticate a user relating to the additional user identification data.
